(19) Europäisches Patentamt European Patent Office Office européen des brevets

(11) **EP 3 141 781 B1**

(12) **EUROPEAN PATENT SPECIFICATION**

(45) Date of publication and mention
of the grant of the patent:
**06.05.2020 Bulletin 2020/19**

(21) Application number: **15788928.8**

(22) Date of filing: **23.03.2015**

(51) Int Cl.:
**F16J 15/10** *(2006.01)*      **F16J 15/06** *(2006.01)*

(86) International application number:
**PCT/JP2015/058658**

(87) International publication number:
**WO 2015/170519 (12.11.2015 Gazette 2015/45)**

(54) **GASKET AND SEALING STRUCTURE**

DICHTUNG UND ABDICHTUNGSSTRUKTUR

JOINT ET STRUCTURE D'ÉTANCHÉITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2014 JP 2014097141**

(43) Date of publication of application:
**15.03.2017 Bulletin 2017/11**

(73) Proprietor: **NOK Corporation
Tokyo 105-8585 (JP)**

(72) Inventor: **FURUBAYASHI, Jun
Aso-shi
Kumamoto 869-2231 (JP)**

(74) Representative: **TBK
Bavariaring 4-6
80336 München (DE)**

(56) References cited:
**WO-A1-2004/092619      WO-A1-2007/054510
JP-A- 2002 039 392      JP-A- 2004 316 724
US-A1- 2011 227 295**

**Description**

[Technical Field]

The present invention relates to a sealing structure that seal a gap between two members.

[Background Art]

For inverters or converters mounted in hybrid cars (HVs), electric vehicles (EVs), or fuel cell vehicles (FCVs), a water-proof gasket is provided between the case body and the cover. That is, the gasket is mounted in an annular mounting groove provided to one of the case body and the cover, with the gasket making tight contact with a groove bottom surface of the mounting groove and an end face of the other member, so that the gap between the case body and the cover is sealed. The case body and cover are commonly die cast aluminum parts. Generally speaking, the dimensional accuracy of die cast aluminum parts is not very high. In such a case, even when there is a relatively large error in compression amount of the gasket, if the gasket has a vertically long cross-sectional shape, the gasket can exhibit its sealing performance stably.

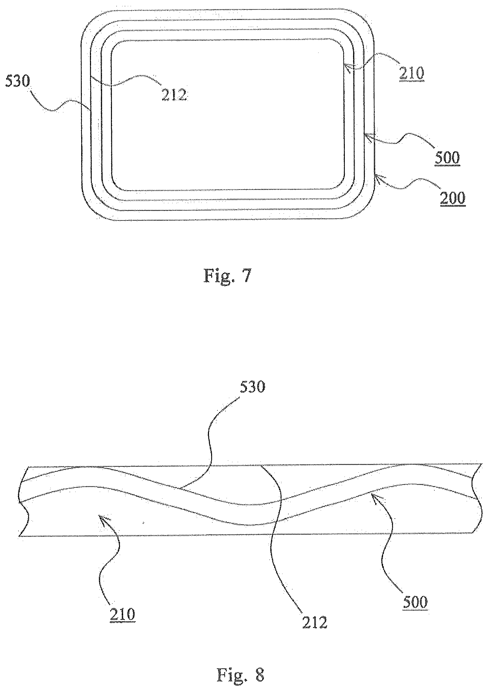

When the gasket has a vertically long cross-sectional shape like this, there is the drawback that it can easily tilt inside the mounting groove by the internal pressure (pressure from the fluid to be sealed). Therefore, it is common to mount the gasket such as to fit along the radially outer side wall surface of the mounting groove. This conventional sealing structure will be described with reference to Fig. 7. Fig. 7 is a plan view illustrating the conventional gasket mounted in a mounting groove.

As shown, a gasket 500 is mounted in an annular mounting groove 210 provided to one (first member 200) of two members (e.g., case body and cover). The gasket 500 is mounted such as to fit along a radially outer side wall surface 212 of the mounting groove 210. As a result, an outer circumferential surface 530 of the gasket 500 makes tight contact with the radially outer side wall surface 212 of the mounting groove 210. By mounting the gasket 500 in this manner, the gasket 500 is prevented from tilting inside the mounting groove 210 when subjected to internal pressure.

However, the temperature in the environment of use of such a gasket 500 used in inverters or converters can reach as high as 100°C. In such an environment, the gasket 500 and the first member 200 expand by heat. Since the gasket 500 and the one member 200 are made of different materials (e.g., the former being made of rubber and the latter being made of aluminum), they undergo expansion at different amounts because of the difference in linear expansion coefficient. Namely, the gasket 500 expands more than the first member 200. Therefore, in a condition with a highest temperature in the environment of use, the perimeter of the outer circumferential surface of the gasket 500 will be longer than the perimeter of the radially outer side wall surface 212 of the mounting groove 210. Because of this, the gasket 500 could meander inside the mounting groove 210 as shown in Fig. 8, thereby making the sealing performance unstable. Fig. 8 is a diagram illustrating the conventional gasket inside the mounting groove at high temperature. In Fig. 7 and Fig. 8, for convenience of explanation, the gap between the gasket 500 and a side wall of the mounting groove 210 is exaggerated and drawn wider.

[Citation list]

[Patent Literature]

[PTL 1] Japanese Patent Application Laid-open No. 2010-178537

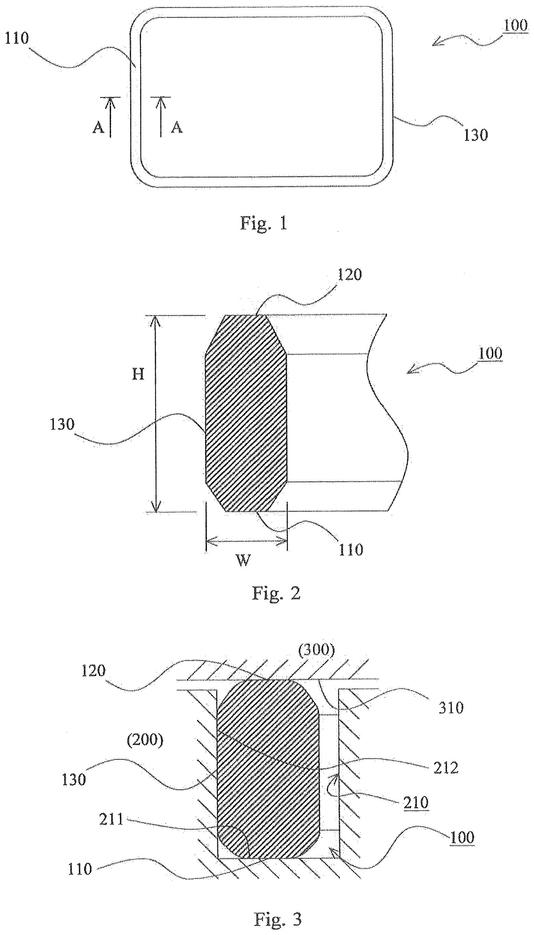

WO 2004/092619 A1 discloses a sealing material for an ant groove, the basic sectional structure of which is approximately in the shape of a trapezoid of which width on the inner side is larger than that on the opening side. The ant groove is disposed in a ring shape so as to enclose a region which must be sealed. As shown in Fig. 1 and 2, the sealing material 30 for an ant groove approximately in an inclined heart shape is made of an elastically deformable rubber material.

WO 2007/054510 A1 discloses a connecting system which comprises a shaft 5 on which peripheral surface a groove 4 is formed. The shaft is insertable along a plug-in axis X-X into an intake opening 6 of a first coupling part 1. In an operating state, an annular seal 3 is pressed and deformed inside the groove 4 generating a pre-pressing force Fv by resting against coupling parts 1 and 2 over a contact length KL extending in axial direction X-X. Thereby, a gap 7 is sealingly closed.

[Summary of Invention]

[Technical Problem]

An object of the present invention is to provide a sealing structure capable of exhibiting stable sealing performance even when used in a high-temperature environment of 100°C.

[Solution to Problem]

The problem is solved by the features defined in claim 1.

The present invention adopts the following means to achieve the object noted above.

Namely, the gasket of the present invention is a gasket that is mounted in an annular mounting groove provided to one of two members and makes tight contact with a groove bottom surface of the mounting groove and an end face of the other one of the two members, to seal a gap between the two members, wherein a perimeter of an outer circumferential surface of the gasket is designed to be not greater than a perimeter of a radially outer side wall surface of the mounting groove in a condition with a temperature of 100°C.

A sealing structure of the present invention includes:

two members fixed to each other; and
a gasket that is mounted in an annular mounting groove provided to one of the two members and makes tight contact with a groove bottom surface of the mounting groove and an end face of the other one of the two members, to seal a gap between the two members, wherein a perimeter of an outer circumferential surface of the gasket is designed to be not greater than a perimeter of a radially outer side wall surface of the mounting groove in a condition with a highest temperature in an environment of use.

The "highest temperature in an environment of use" herein refers to a maximum value of environmental temperature to which the gasket is exposed during operation of equipment to which the gasket is mounted.

According to the present invention, even when the gasket and one member undergo thermal expansion in the condition with the highest temperature in the environment of use, the perimeter of the outer circumferential surface of the gasket is not greater than the perimeter of the radially outer side wall surface of the mounting groove. Therefore, meandering of the gasket inside the mounting groove can be prevented.

Further, the perimeter of the outer circumferential surface of the gasket is designed to be between 98% and 99% of the perimeter of the radially outer side wall surface of the mounting groove in the condition with a temperature of 100°C.

This way, meandering of the gasket inside the mounting groove can be prevented, and also, the gasket is prevented from tilting because of internal pressure inside the mounting groove.

[Advantageous Effects of Invention]

As described above, according to the present invention, stable sealing performance can be exhibited even in an environment of use at high temperature.

[Brief Description of Drawings]

[Fig. 1] Fig. 1 is a plan view of a gasket according to an embodiment of the present invention.
[Fig. 2] Fig. 2 is a schematic cross-sectional view of the gasket according to the embodiment of the present invention.
[Fig. 3] Fig. 3 is a schematic cross-sectional view of the gasket in use according to the embodiment of the present invention.
[Fig. 4] Fig. 4 is a diagram illustrating the gasket inside a mounting groove according to the embodiment of the present invention at room temperature.
[Fig. 5] Fig. 5 is a diagram illustrating the gasket inside a mounting groove according to the embodiment of the present invention at high temperature.
[Fig. 6] Fig. 6 is a diagram illustrating the gasket inside a mounting groove according to a variation example of the present invention at high temperature.
[Fig. 7] Fig. 7 is a plan view illustrating a conventional gasket mounted in a mounting groove.

[Fig. 8] Fig. 8 is a diagram illustrating the conventional gasket inside the mounting groove at high temperature.

[Description of Embodiment]

Modes for carrying out this invention will be hereinafter illustratively described in detail based on specific embodiments with reference to the drawings. It should be noted that, unless otherwise particularly specified, the sizes, materials, shapes, and relative arrangement or the like of constituent components described in this embodiment are not intended to limit the scope of this invention.

(Embodiment)

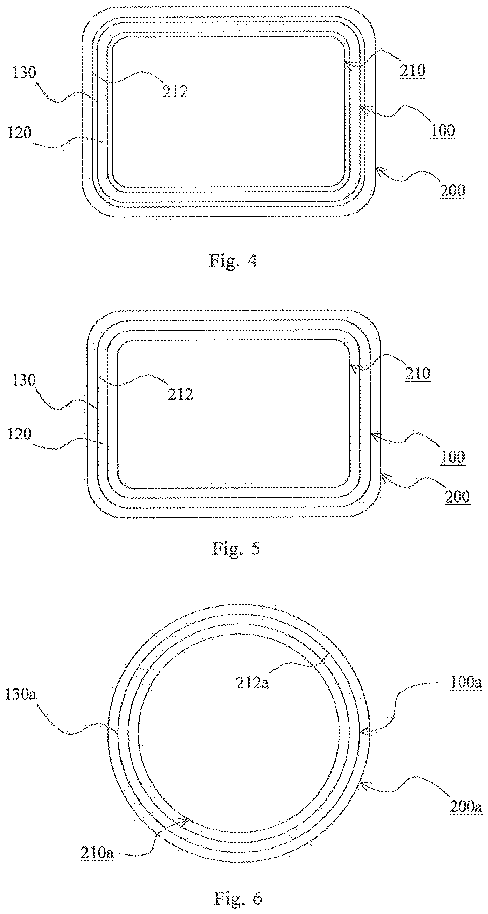

A gasket and a sealing structure according to an embodiment of the present invention will be described with reference to Fig. 1 to Fig. 5. Fig. 1 is a plan view of the gasket according to the embodiment of the present invention. Fig. 2 is a schematic cross-sectional view of the gasket according to the embodiment of the present invention, showing a section along A-A in Fig. 1. Fig. 3 is a schematic cross-sectional view of the gasket in use according to the embodiment of the present invention. Fig. 4 is a diagram illustrating the gasket inside a mounting groove according to the embodiment of the present invention at room temperature. Fig. 5 is a diagram illustrating the gasket inside a mounting groove according to the embodiment of the present invention at high temperature. Fig. 4 and Fig. 5 show a gasket 100 inside a mounting groove 210 in plan view. Fig. 4 and Fig. 5 show a first member 200 (one member) only schematically, with parts other than the mounting groove 210 being not shown.

<Gasket>

The gasket 100 according to the embodiment will now be described with reference particularly to Fig. 1 and Fig. 2. The gasket 100 according to this embodiment is formed by an annular member having a generally rectangular shape in plan view. This gasket 100 is made of an elastic material such as synthetic rubber or thermoplastic elastomer. The gasket 100 is formed to have a vertically long cross-sectional shape. Namely, the height H of the gasket 100 (distance from one end face 110 to the other end face 120) is larger than the width W of the gasket 100. More specifically, the gasket is designed such that H/W is between 2 and 4. Where the height H is within the range of 4 mm to 7 mm while the width W is within the range of 1.5 mm to 3 mm, for example, the gasket should preferably be designed such that H/W is between 2 and 4.

<Sealing structure>

The sealing structure according to this embodiment will now be described with reference particularly to Fig. 3. The sealing structure according to this embodiment includes two members fixed to each other. Hereinafter, one of the two members will be referred to as "first member 200", while the other of the two members will be referred to as "second member 300". Specific examples of these members include a case body (first member 200) of an inverter or a converter mounted on an HV, EV, or FCV, and its cover (second member 300).

An annular mounting groove 210 is formed in the first member 200. This annular mounting groove 210 has a shape in plan view similar to that of the gasket 100 (see Fig. 4 and Fig. 5), and a rectangular cross-sectional shape. The gasket 100 is mounted in this mounting groove 210. One end face 110 of the gasket 100 makes tight contact with a groove bottom surface 211 of the mounting groove 210, while the other end face 120 makes tight contact with an end face 310 of the second member 300. This way, the gasket 100 seals the gap between the first member 200 and the second member 300. If the first member 200 and second member 300 are die cast aluminum parts, their dimensional accuracy is not very high. However, since the gasket 100 according to this embodiment has a vertically long cross-sectional shape as mentioned above, the gasket can exhibit its sealing performance stably even when there is a relatively large error in compression amount of the gasket 100.

<Dimensional relationship between gasket and mounting groove>

The dimensional relationship between the gasket 100 and the mounting groove 210 according to the embodiment will now be described with reference particularly to Fig. 4 and Fig. 5. Fig. 4 and Fig. 5 illustrate the gasket 100 mounted in the mounting groove 210 in plan view. Fig. 4 shows a state at room temperature, while Fig. 5 shows a state at high temperature (a highest temperature in an environment of use). In Fig. 4 and Fig. 5, for convenience of explanation, the gap between the gasket 100 and a side wall of the mounting groove 210 is exaggerated and drawn wider.

At room temperature (25°C), a gap is formed each between the inner circumferential surface of the gasket 100 and a radially inner side wall surface of the mounting groove 210, and between the outer circumferential surface 130 of the gasket 100 and a radially outer side wall surface 212 of the mounting groove 210 (see Fig. 4). In contrast, at high temperature, the outer circumferential surface 130 of the gasket 100 makes contact with the radially outer side wall surface 212 of the mounting groove 210 (see Fig. 5). In this embodiment, the gasket 100 is designed such that the outer circumferential surface 130 of the gasket 100 makes contact with the radially outer side wall surface 212 of the mounting groove 210 at high temperature but not at room temperature. This feature will be described in more detail below. In this embodiment, a "highest temperature in an environment of use" refers to a maximum value of environmental temperature to which the gasket is exposed during operation of equipment to which the gasket is mounted. For convenience of explanation, "room temperature" may be referred to as "room temperature T(RT)", and "highest temperature in an environment of use" will be referred to as "maximum environmental temperature T(MAX)", as the case may be.

In this embodiment, a perimeter L1(MAX) of the outer circumferential surface of the gasket 100 at a maximum environmental temperature T(MAX) is designed to be not greater than a perimeter L2(MAX) of the radially outer side wall surface 212 of the mounting groove 210 at a maximum environmental temperature T(MAX). Here, given that L1(RT) represents the perimeter of the outer circumferential surface of the gasket 100 at room temperature T(RT) and $\alpha1$ represents the linear expansion coefficient of the gasket 100,

$$\text{L1(MAX)} \;=\; \text{L1(RT)} \;\times\; \{1 \;+\; \alpha1\,(\text{T(MAX)} \;-\; \text{T(RT)})\}$$

Given that L2(RT) represents the perimeter of the radially outer side wall surface 212 of the mounting groove 210 at room temperature T(RT) and a2 represents the linear expansion coefficient of the first member 200,

$$\text{L2(MAX)} \;=\; \text{L2(RT)} \;\times\; \{1 \;+\; \alpha2\,(\text{T(MAX)} \;-\; \text{T(RT)})\}.$$

The room temperature T(RT) may be 25°C. Further, when the gasket 100 is used for an inverter or a converter mounted on an HV, EV, or FCV, the gasket 100 is exposed to a maximum value of an environmental temperature of about 100°C. Therefore, T(MAX) in the equation above may be 100°C.

In order to reliably prevent the gasket 100 from tilting inside the mounting groove 210 when subjected to internal pressure (pressure from the fluid being sealed), the outer circumferential surface 130 of the gasket 100 should preferably be in tight contact with the radially outer side wall surface 212 of the mounting groove 210. Therefore, ideally, L1(MAX) = L2(MAX) should be met. However, in actuality, taking into account the dimensional errors and the like of various parts, the gasket should preferably be designed such that the following equation is met:

$$98[\%] \;\le\; \text{L1(MAX)} \;\div\; \text{L2(MAX)} \;\times\; 100 \;\le\; 99[\%]$$

<Excellent features of the gasket and sealing structure according to this embodiment>

According to the present invention, even when the gasket 100 and the first member 200 undergo thermal expansion in a condition with a maximum environmental temperature T(MAX), the perimeter L1(MAX) of the outer circumferential surface of the gasket 100 is not greater than the perimeter L2(MAX) of the radially outer side wall surface 212 of the mounting groove 210. Therefore, meandering of the gasket 100 inside the mounting groove 210 can be prevented.

In the embodiment, the perimeter L1(MAX) of the outer circumferential surface of the gasket 100 is designed to be between 98% and 99% of the perimeter L2(MAX) of the radially outer side wall surface 212 of the mounting groove 210 in a condition with a maximum environmental temperature T(MAX). This way, meandering of the gasket 100 inside the mounting groove 210 can be prevented, and also, the gasket is prevented from tilting inside the mounting groove 210 because of internal pressure.

(Others)

In the embodiment described above, a configuration was shown where the gasket 100 and mounting groove 210 have a substantially rectangular shape in plan view. However, the shape in plan view of the gasket and mounting groove in the present invention is not limited to rectangular. As long as the gasket can be designed such that its outer circumferential surface does not make contact with the radially outer side wall surface of the mounting groove at room temperature but makes contact therewith at high temperature, various shapes can be adopted. For example, as shown in Fig. 6, the gasket and mounting groove may have a circular shape in plan view. Fig. 6 is a diagram illustrating the gasket inside the mounting groove according to a variation example of the present invention at high temperature.

A gasket 100a according to the illustrated variation example is formed by an annular member having a circular shape in plan view. The material and cross-sectional shape of the gasket 100a are the same as those of the embodiment described above. A mounting groove 210a that is circular in plan view is provided to a first member 200a. In this variation example, too, the gasket 100a is designed such that an outer circumferential surface 130a of the gasket 100a makes contact with a radially outer side wall surface 212a of the mounting groove 210a at high temperature but not at room temperature. Fig. 6 shows a state of the gasket 100a in a high-temperature environment (condition with a maximum environmental temperature T(MAX)) in which the outer circumferential surface 130a is in contact with the radially outer side wall surface 212a of the mounting groove 210a. It goes without saying that the gasket 100a and sealing structure configured as described above can provide the same effects as those of the embodiment described above.

[Reference Signs List]

| | |
|---|---|
| 100, 100a | Gasket |
| 110, 120 | End face |
| 130, 130a | Outer circumferential surface |
| 200, 200a | First member |
| 210, 210a | Mounting groove |
| 211 | Groove bottom surface |
| 212, 212a | Side wall surface |
| 300 | Second member |
| 310 | End face |

**Claims**

1.  A sealing structure, comprising:

    two members (200, 300; 200a, 300a) fixed to each other; and
    a gasket (100; 100a) that is mounted in an annular mounting groove (210; 210a) provided to one of the two members (200; 200a) and makes tight contact with a groove bottom surface (211) of the mounting groove (210; 210a) and an end face (310) of the other one of the two members (300; 300a), to seal a gap between the two members,
    wherein a perimeter (L1(MAX)) of an outer circumferential surface of the gasket (100; 100a) is designed to be not greater than a perimeter (L2(MAX)) of a radially outer side wall surface (212; 212a) of the mounting groove (210; 210a) in a condition with a temperature of 100°C
    **characterised in** the perimeter (L1(MAX)) of the outer circumferential surface of the gasket (100; 100a) is designed to be between 98% and 99% of the perimeter (L2(MAX)) of the radially outer side wall surface (212; 212a) of the mounting groove (210;210a) in the condition with the temperature of 100°C.

**Patentansprüche**

1.  Dichtungsstruktur, mit:

    zwei aneinander befestigten Elementen (200, 300; 200a, 300a); und
    einer Dichtung (100; 100a), die in einer ringförmigen Montagenut (210; 210a) montiert ist, die an einem der beiden Elemente (200; 200a) vorgesehen ist, und in dichtem Kontakt mit einer Nutbodenfläche (211) der Montagenut (210; 210a) und einer Stirnfläche (310) des anderen der beiden Elemente (300; 300a) steht, um einen Spalt zwischen den beiden Elementen abzudichten, wobei
    ein Umfang (L1(MAX)) einer äußeren Umfangsfläche der Dichtung (100; 100a) so ausgelegt ist, dass er nicht größer ist als ein Umfang (L2(MAX)) einer radial äußeren Seitenwandfläche (212; 212a) der Montagenut (210; 210a) in einem Zustand bei einer Temperatur von 100°C, **dadurch gekennzeichnet, dass** der Umfang (L1(MAX)) der äußeren Umfangsfläche der Dichtung (100; 100a) ausgelegt ist, sodass er zwischen 98% und 99% des Umfangs (L2(MAX)) der radial äußeren Seitenwandfläche (212; 212a) der Montagenut (210; 210a) in dem Zustand bei der Temperatur von 100°C beträgt.

**Revendications**

1. Structure d'étanchéité, comprenant :

   deux organes (200, 300 ; 200a, 300a) fixés l'un à l'autre ; et
   un joint d'étanchéité (100 ; 100a) qui est monté dans une rainure de montage annulaire (210 ; 210a) fournie à l'un des deux organes (200 ; 200a) et assure un contact étroit avec une surface de fond de rainure (211) de la rainure de montage (210 ; 210a) et une face d'extrémité (310) de l'autre des deux organes (300 ; 300a), pour étanchéifier un espace entre les deux organes,
   dans laquelle un périmètre (L1(MAX)) d'une surface circonférentielle externe du joint d'étanchéité (100 ; 100a) est conçu pour ne pas être supérieur à un périmètre (L2(MAX)) d'une surface de paroi latérale radialement externe (212 ; 212a) de la rainure de montage (210 ; 210a) dans une condition avec une température de 100 °C **caractérisée en ce que**
   le périmètre (L1(MAX)) de la surface circonférentielle externe du joint d'étanchéité (100 ; 100a) est conçu pour être entre 98 % et 99 % du périmètre (L2(MAX)) de la surface de paroi latérale radialement externe (212 ; 212a) de la rainure de montage (210 ; 210a) dans la condition avec la température de 100 °C.

110

100

A A

130

Fig. 1

120

100

H

130

110

W

Fig. 2

(300)

120

310

(200)

130

212

210

211

110

100

Fig. 3

130

120

212

210

100

200

Fig. 4

130

120

212

210

100

200

Fig. 5

130a

212a

100a

200a

210a

Fig. 6

530

212

210

500

200

Fig. 7

530

210

212

500

Fig. 8

**EP 3 141 781 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010178537 A
- WO 2004092619 A1
- WO 2007054510 A1